# EUROPÄISCHE PATENTSCHRIFT

(11) **EP 4 004 259 B1**
(45) Veröffentlichungstag und Bekanntmachung des Hinweises auf die Patenterteilung: **19.10.2022**
(21) Anmeldenummer: 20758201.6
(22) Anmeldetag: 19.08.2020
(51) Int. Cl.: C25B 15/08, C25B 1/04, C25B 9/19, C25B 9/77

(54) **KREUZFLUSSWASSERELEKTROLYSE**
CROSS-FLOW WATER ELECTROLYSIS
ÉLECTROLYSE DE L'EAU À FLUX CROISÉ

(30) Priorität: 05.09.2019 DE 102019123858
(43) Veröffentlichungstag der Anmeldung: 01.06.2022
(73) Patentinhaber: thyssenkrupp nucera AG & Co. KGaA, 44141 Dortmund (DE)
(72) Erfinder: KUHLMANN, Jens Wilhelm, 44328 Dortmund (DE); HOORMANN, Dirk, 59368 Werne a.d. Lippe (DE); KOLBE, Jörg, 44789 Bochum (DE); LÜKE, Lukas, 44141 Dortmund (DE); POLCYN, Gregor Damian, 44225 Dortmund (DE)
(74) Vertreter: thyssenkrupp Intellectual Property GmbH
(86) Internationale Anmeldenummer: PCT/EP2020/073215
(87) Internationale Veröffentlichungsnummer: WO 2021/043578

(56) Entgegenhaltungen:
- EP-A1- 3 358 044
- EP-A1- 3 486 354
- DE-A1- 19 805 058
- DE-A1-102015 212 503
- DE-A1-102017 216 710

## Beschreibung

### Technisches Gebiet

Die vorliegende Erfindung betrifft Verfahren zur alkalischen Elektrolyse von Wasser, in denen ein Elektrolyt im Kreislauf zwischen einer Anodenhalbzelle und Kathodenhalbzelle gepumpt wird, um so die Elektrolytkonzentration über den Elektrolyseprozess konstant zu halten. Durch diese Verfahrensführung lassen sich Nachteile, wie beispielsweise die Ausbildung eines Donnan-Potentials, und die Ausbildung von Fließströmen weitestgehend unterdrücken. Die vorliegende Erfindung betrifft weiterhin Elektrolysevorrichtungen, mit denen das angegebene Verfahren durchgeführt werden kann.

### Stand der Technik

Das Prinzip der Wasserelektrolyse ist seit etwa 200 Jahren bekannt und dient der Erzeugung von Wasserstoff und Sauerstoffgas aus Wasser. In technischer Hinsicht spielt heute die saure Wasserelektrolyse eine nur untergeordnete Rolle, während alkalische Elektrolyseprozesse großtechnisch wirtschaftliche Anwendung gefunden haben. Bei der alkalischen Elektrolyse kommt als Elektrolyt eine etwa 25-30%ige Alkalilauge, beispielsweise in Form von Natron- oder Kalilauge, zum Einsatz, die einem an der Zelle angelegten Strom ausgesetzt wird. Häufig werden dabei getrennte Kathoden- und Anodenkreisläufe genutzt, um eine Vermischung der erhaltenen Produktgase (Sauerstoff und Wasserstoff) zu unterbinden. Durch den Strom wird an der Kathode Wasserstoff und an der Anode Sauerstoff erzeugt.

Während die Wasserelektrolyse zur Herstellung von Wasserstoff bisher in ihrer Bedeutung untergeordnet war, weil Wasserstoff kostengünstiger beispielsweise mit Hilfe von Erdgas, Erdöl oder Kohle herstellbar war, gewinnt die Wasserelektrolyse heute zunehmend an Bedeutung. Ursache dafür ist einerseits, dass nicht erneuerbare Rohstoffen, wie Öl und Gas knapper werden, andererseits ist die zunehmende Bedeutung aber auch mit der größeren Verfügbarkeit von Elektrizität, die aus Wind oder Sonne erzeugt wird und daher nicht kontinuierlich zur Verfügung steht, zu erklären. Die Elektrolysereaktion kann im diesem Zusammenhang, beispielsweise in Kombination mit Brennstoffzellen, zur Verstetigung der Stromerzeugung eingesetzt werden, weil immer dann, wenn überschüssige elektrische Energie zur Verfügung steht, Wasser in Wasserstoff und Sauerstoff gespalten werden kann, die, wenn viel Energie gebraucht wird, mit Hilfe von Brennstoffzellen wieder in Energie umgesetzt werden können. Darüber hinaus kann Wasserstoff durch Zusatz von Kohlenmonoxid oder Kohlendioxid zu Methan umgesetzt werden, das dann in das Erdgasnetz, vorzugsweise zur Wärmeerzeugung, eingespeist werden kann. Schließlich kann der erzeugte Wasserstoff auch in geringen Anteilen mit Erdgas vermischt und einer Verbrennung beispielsweise zur Wärmegewinnung zugeführt werden.

Da erwartet wird, dass die Erzeugung von unstetigem Strom aus Wind oder Sonne in den nächsten Jahren noch deutlich zunehmen wird, besteht ein Bestreben, die Effektivität der Speicherung von überschüssiger Energie zu erhöhen. Ein Problem, das derzeit noch mit der Erzeugung von Wasserstoff aus Wasser verbunden ist, besteht darin, dass die Energieausbeute bzw. der Wirkungsgrad der auf dem Markt verfügbaren Elektrolysevorrichtungen unzureichend ist. So beträgt der energetische Wirkungsgrad der Elektrolyse von Wasser heute in der Regel etwa 70%, wobei auch schon einige Elektrolysegeräte verfügbar sind, die einen Wirkungsgrad von nahe 80% aufweisen.

In Bezug auf den Wirkungsgrad besteht dennoch noch Verbesserungsbedarf, insbesondere im Vergleich zu alternativen Stromspeichertechnologien, wie Akkumulatoren. Gegenüber Akkumulatoren weist die Wasserelektrolyse allerdings den wesentlichen Vorteil auf, dass die Menge der speicherbaren Energie praktisch unbegrenzt ist, da Wasser in ausreichender Menge zur Verfügung steht und auch ausreichende Kapazitäten für die Speicherung von Wasserstoff vorhanden wären.

Vor dem Hintergrund des geschilderten Sachverhalts besteht ein Bedarf nach einem Elektrolyseverfahren, das in Bezug auf seinen Wirkungsgrad über die bekannten Elektrolyseverfahren hinausgehenden Verbesserungen mit sich bringt.

Bei konventionell bekannten und genutzten Wasserelektrolyseverfahren werden heute häufig voneinander getrennte Anoden und Kathodenelektrolytkreisläufe genutzt, d.h. zwischen dem Kathoden- und Anodenkreislauf findet kein Elektrolytaustausch statt (auch als separated circles-Verfahren bezeichnet). Eine derartige Verfahrensführung bringt allerdings den Nachteil mit sich, dass sich im Laufe des Elektrolyseverfahrens ein Konzentrationsunterschied des alkalischen Elektrolyts zwischen der Anodenseite und der Kathodenseite aufbaut. Dies führt zu einem Anstieg der Zellspannung durch Ausbildung eines Donnan-Potentials, und wirkt sich negativ auf den Wirkungsgrad der Vorrichtung aus. Ein Beispiel für eine derartige Verfahrensführung ist beispielsweise in der WO 2015/007716 A1 beschrieben, in der eine Elektrolysezelle mit einer Kathoden- und Anodenseite offenbart wird, die durch eine Kationen-Austausch-Membran getrennt sind. Diese Anmeldung zielt auf die Bereitstellung möglichst reinen Sauerstoffs und Wasserstoffs ab, so dass hier penibel darauf zu achten ist, dass eine Vermischung der Kathoden- und Anodenelektrolysate vermieden wird.

In einem anderen Ansatz durchläuft der Elektrolyt die Kathoden- und Anodenhalbzelle jeweils in getrennten Zyklen. Anschließend werden die aus der Anoden- und Kathodenhalbzelle abgeleiteten Elektrolytfraktionen in einem gemeinsamen Tank geleitet und vermischt, bevor der Elektrolyt erneut der Kathoden- und Anodenhalbzelle zugeführt wird (auch als divided circles-Verfahren bezeichnet). Auch dieses Alternativverfahren ist jedoch mit dem Nachteil von Konzentrationsdifferenzen des Elektrolyten zwischen den beiden Halbzellen verbunden, die wiederum zu einem Donnan-Potential und damit zu einem verminderten Wirkungsgrad der Vorrichtung führen.

Darüber hinaus besteht bei dem divided circles-Verfahren das Problem, dass bei hohen Stromdichten Querströme über den gemeinsamen Tank entstehen können. Auch dies wirkt sich negativ auf den Wirkungsgrad des Verfahrens aus. Ursache dieser verschiedenen Nachteile ist zum einen die elektrochemische Reaktion selbst, aber andererseits auch die elektrolytische Verbindung zwischen der Anoden- und Kathodenseite im divided circles-Verfahren.

Die vorliegende Erfindung befasst sich einerseits mit dem Problem, einen möglichst hohen Wirkungsgrad der Wasserelektrolyse zu gewährleisten, während andererseits die Nachteile des Standes der Technik weitestgehend vermieden werden sollen.

### Darstellung der Erfindung

Zur Lösung der vorstehend geschilderten Probleme schlägt die vorliegende Erfindung in einer Ausführungsform ein Verfahren zur alkalischen Elektrolyse von Wasser mit einem Elektrolyten in einem Elektrolyseur vor, der mindestens eine Elektrolysezelle, einen kathodischen Gasabscheider, einen anodischen Gasabscheider, ein erstes Flüssigkeitsreservoir für den Elektrolyten und ein vom ersten Flüssigkeitsreservoir getrenntes zweites Flüssigkeitsreservoir für den Elektrolyten aufweist, wobei die Elektrolysezelle eine Anodenhalbzelle mit einer Anode, eine Kathodenhalbzelle mit einer Kathode, und einen zwischen Anodenhalbzelle und Kathodenhalbzelle angeordneten Separator umfasst, wobei ein Strom an den mit dem Elektrolyten gefüllten Elektrolyseur angelegt wird, um die Elektrolyse durchzuführen, wobei Elektrolyt aus dem ersten Flüssigkeitsreservoir der Anodenhalbzelle zugeführt wird und der aus der Anodenhalbzelle ablaufende Anolyt dem anodischen Gasabscheider zugeführt wird, in dem das Gas vom Anolyten abgeschieden wird, und wobei Elektrolyt aus dem zweiten Flüssigkeitsreservoir der Kathodenhalbzelle zugeführt wird und der aus der Kathodenhalbzelle ablaufende Katholyt dem kathodischen Gasabscheider zugeführt wird, in dem das Gas vom Katholyten abgeschieden wird, dadurch gekennzeichnet, dass der vom Gas befreite Anolyt aus dem anodischen Gasabscheider in das zweite Flüssigkeitsreservoir zurückgeführt wird und der vom Gas befreite Katholyt aus dem kathodischen Gasabscheider in das erste Flüssigkeitsreservoir zurückgeführt wird.

Für eine derartige Verfahrensführung wurde zum einen eine im Wesentlichen konstante Elektrolytkonzentration in der Anoden- und Kathodenhalbzelle beobachtet, die sich in geringen für die Verfahrensführung erforderlichen Spannungen bemerkbar macht. Zum anderen wurde überraschend beobachtet, dass es trotz der Zuführung des Elektrolyten aus der Anodenhalbzelle in die Kathodenhalbzelle nur in sehr geringem Umfang zu einer Vermischung der Produktgase durch im Elektrolyten gelöste Gasanteile kommt, die sich im ppm Bereich bewegt.

Bei dem im Vorstehenden erwähnten Separator handelt es sich vorzugsweise um ein Diaphragma, insbesondere um ein semipermeables Diaphragma. Als geeignete Diaphragmamaterialien können beispielsweise Zirkonoxid-Polysulfonsäure-Membranen angegeben werden. Ein weiteres im Rahmen der Erfindung geeignetes Diaphragmamaterial sind oxidkeramische Materialien, wie sie in der EP 0 126 490 A1 beschrieben sind.

Alternativ kann es sich bei dem Separator aber auch um eine Membran, insbesondere um eine Kationen-Austausch-Membran handeln. Solche Membranen können auf sulfonierten Polymeren und insbesondere auf perfluorierten sulfonierten Polymeren beruhen und sind beispielsweise unter der Handelsbezeichnung Nafion von DuPont erhältlich. Besonders geeignete Kationen Austausch Membranen sind nicht-verstärkte einschichtige sulfonierte Membranen, wie sie gewöhnlich für die Anwendung in Brennstoffzellen genutzt werden.

Bei dem im Rahmen des erfindungsgemäßen Verfahrens verwendeten Elektrolyten handelt es sich vorzugsweise um eine wässrige Alkalilauge und besonders bevorzugt um eine wässrige Natron- oder Kalilauge. Die Konzentration dieser Laugen liegt zweckmäßig in einem Bereich von 8 bis 45 Gew.-% und besonders bevorzugt in einem Bereich von 20 bis 40 Gew.-%.

In Bezug auf die Durchflussgeschwindigkeit des Elektrolyten in Relation zum Zellvolumen durch die Anoden- bzw. Kathodenhalbzelle unterliegt die vorliegende Erfindung keinen wesentlichen Beschränkungen und es ist dem Fachmann ersichtlich, dass sich die Durchflussmenge auch an der Größe der Kathoden- und Anodenhalbzellen orientiert. Die Durchflussgeschwindigkeit sollte einerseits so hoch sein, dass sich im Laufe der Elektrolysereaktion kein wesentlicher Konzentrationsunterschied zwischen den Elektrolyten in der Kathoden- und Anodenhalbzelle ausbilden kann, andererseits sind hohe Durchflussgeschwindigkeiten aber mit einem höheren energetischen Aufwand in Bezug auf die Pumpleistung verbunden, so dass eine sehr hohe Durchflussgeschwindigkeit die Effizienz des Verfahrens beeinträchtigt. Als besonders geeignete Durchflussgeschwindigkeiten in Relation zum Zellvolumen für den Elektrolyten haben sich im Rahmen der vorliegenden Erfindung ein Bereich von 1 bis 6 L_{Elektrolyt}/h·L_{Halbzellenvolumen} und insbesondere 2 bis 4 L_{Elektrolyt}/h·L_{Halbzellenvolumen} herausgestellt.

In Bezug auf die Temperatur gilt einerseits, dass eine höhere Temperatur eine höhere Ionenmobilität zur Folge hat, so dass sich eine höhere Temperatur in Bezug auf den Wirkungsgrad positiv bemerkbar macht. Andererseits erhöht sich, insbesondere bei stark alkalischen Elektrolyten, die Aggressivität des Elektrolyten gegenüber dem Material der Elektrolysezelle und der Dampfdruck des Elektrolyten, was höhere Anforderungen an die für den Aufbau des Elektrolyseur verwendeten Materialien stellt. Besonders geeignet liegt die Temperatur während der Durchführung des Elektrolyseverfahrens in einem Bereich von 50 bis 95°C, bevorzugt ist ein Bereich von 65 bis 92°C, und besonders bevorzugt ein Bereich von 70 bis 90°C.

Das erfindungsgemäße Verfahren lässt sich dadurch vorteilhaft weiter ausgestalten, indem die Elektrolyse bei einem gegenüber dem Atmosphärendruck erhöhten Druck durchgeführt wird. Beispielsweise kann die Elektrolyse bei einem Druck im Bereich von 1 bis 30 bar und insbesondere 5 bis 20 bar durchgeführt werden. Ein höherer Druck bringt den Vorteil mit sich, dass die während des Elektrolyseprozesses generierten Gase im Elektrolyt gelöst bleiben, während sie bei Normaldruck als Gasbläschen freigesetzt werden können, die den Widerstand der Elektrolytlösung erhöhen. Andererseits führt ein höherer Druck aber auch zu höheren systemischen Anforderungen an das Material, so dass es aus Kostenerwägungen sinnvoll sein kann, das Verfahren bei einem Druck von nicht mehr als 1 bar, bevorzugt nicht mehr als 500 mbar und besonders bevorzugt von nicht mehr als 250 bar über Atmosphärendruck durchzuführen.

Im erfindungsgemäßen Verfahren ist es weiterhin zweckmäßig, wenn die Elektrolyse bei einer Stromdichte im Bereich bis 25 kA/m² und bis 15 kA/m² durchgeführt wird. Bei einer Stromdichte, die geringer ist als 3 kA/m², nimmt die Effizienz des Verfahrens ab. Stromdichten von mehr als 25 kA/m² stellen in der Regel so hohe Anforderungen an das Material, dass diese aus ökonomischer Sicht ungünstig sind.

Im Rahmen des vorstehend geschilderten Verfahrens werden Elektrolyseure genutzt, die ein erstes Flüssigkeitsreservoir für den Elektrolyten und ein vom ersten Flüssigkeitsreservoir getrenntes zweites Flüssigkeitsreservoir für den Elektrolyten aufweisen, und in die der Elektrolyt aus dem kathodischen und anodischen Gasabscheider eingeleitet wird. Während das Verfahren zweckmäßig die Verwendung von getrennten Flüssigkeitsreservoiren vorsieht, sind diese nicht erforderlich, wenn der Elektrolyt ohne Umweg über ein Flüssigkeitsreservoir von dem jeweiligen Gasabscheider in die jeweils andere Halbzelle eingeleitet wird (d.h. vom kathodischen Gasabscheider in die Anodenhalbzelle und umgekehrt). Ein weitere Aspekt der vorliegenden Erfindung betrifft daher ein Verfahren zur alkalischen Elektrolyse von Wasser mit einem Elektrolyten in einem Elektrolyseur, der mindestens eine Elektrolysezelle, einen kathodischen Gasabscheider, und einen anodischen Gasabscheider aufweist, wobei die Elektrolysezelle eine Anodenhalbzelle mit einer Anode, eine Kathodenhalbzelle mit einer Kathode, und einen zwischen Anodenhalbzelle und Kathodenhalbzelle angeordneten Separator umfasst, wobei ein Strom an den mit dem Elektrolyten gefüllten Elektrolyseur angelegt wird, um die Elektrolyse durchzuführen, wobei Elektrolyt aus dem kathodischen Gasabscheider ausschließlich der Anodenhalbzelle zugeführt wird und der aus der Anodenhalbzelle ablaufende Anolyt dem anodischen Gasabscheider zugeführt wird, in dem das Gas vom Anolyten abgeschieden wird, und wobei Elektrolyt aus dem anodischen Gasabscheider ausschließlich der Kathodenhalbzelle zugeführt wird und der aus der Kathodenhalbzelle ablaufende Katholyt dem kathodischen Gasabscheider zugeführt wird, in dem das Gas vom Katholyten abgeschieden wird.

Für bevorzugt Ausführungsformen dieses Verfahrens sei auf die vorstehenden Ausführungen verwiesen, die analog für dieses Verfahren gelten.

Ein weiterer Aspekt der vorliegenden Erfindung betrifft eine Vorrichtung zur elektrolytischen Spaltung von Wasser in Wasserstoff und Sauerstoff, die eine Anodenhalbzelle mit einer Anode, eine Kathodenhalbzelle mit einer Kathode sowie einen zwischen Anodenhalbzelle und Kathodenhalbzelle angeordneten Separator umfasst, wobei die Anodenhalbzelle und die Kathodenhalbzelle jeweils in Fließverbindung mit einem in Bezug auf die Anodenhalbzelle bzw. die Kathodenhalbzelle separaten Flüssigkeitsreservoir stehen, und wobei die Anodenhalbzelle und die Kathodenhalbzelle jeweils in Fließverbindung mit einem in Bezug auf die Anodenhalbzelle bzw. die Kathodenhalbzelle separaten, Gasabscheider stehen. In dieser Vorrichtung steht der Gasabscheider der Anodenhalbzelle in Fließverbindung mit dem Flüssigkeitsreservoir der Kathodenhalbzelle und nicht in Fließverbindung mit dem Flüssigkeitsreservoir der Anodenhalbzelle, während der Gasabscheider der Kathodenhalbzelle in Fließverbindung mit dem ersten Flüssigkeitsreservoir der Anodenhalbzelle und nicht in Fließverbindung mit dem ersten Flüssigkeitsreservoir der Kathodenhalbzelle steht. Letzteres unterscheidet die Vorrichtung von einer Vorrichtung zur Durchführung eine divided circles-Verfahrens, da hier die jeweiligen Gasabscheider in Fließverbindung mit einem gemeinsamen Flüssigkeitsreservoir stehen, aus dem der Elektrolyt sowohl in die Anoden- als auch in die Kathodenhalbzelle gespeist wird.

Als Separator sind im Rahmen dieser erfindungsgemäßen Vorrichtung insbesondere die Materialien geeignet, die vorstehend für das erfindungsgemäße Verfahren angegeben wurden.

In der erfindungsgemäßen Vorrichtung wird der Elektrolyt zweckmäßig mit Hilfe von geeigneten Zuführ- und Abführeinrichtungen in den jeweiligen Halbzellen der Zelle geleitet. Die kann beispielsweise mit Hilfe eine Pumpe erfolgen.

Die erfindungsgemäße Vorrichtung ist, insbesondere im Bereich der Elektrolysezelle, zweckmäßig aus einem Material hergestellt, dass durch den Elektrolyten nicht oder nur in sehr geringem Umfang angegriffen wird. Ein solches Material ist z.B. Nickel, aber auch PPS und, abhängig von der Laugenkonzentration im Elektrolyten, auch Nickel-legierte Edelstähle.

Die erfindungsgemäße Vorrichtung ist darüber hinaus dann vorteilhaft ausgebildet, wenn die Anode aus einem Nickel haltigen Material besteht. Geeignete Nickelhaltige Material sind zum Beispiel Ni/Al oder Ni/Co/Fe-Legierungen oder Nickel das mit Metalloxiden wie vom Perowskit- oder Spinelltyp beschichtet wurden. Besonders geeignete Metalloxide sind in diesem Zusammenhang Lanthan-Perowskite und Kobalt-Spinelle. Ein besonderes geeignetes Anodenmaterial ist Ni/Al das mit Co₃O₄ beschichtet wurde. Als Anode wird hierbei nur dasjenige Bauteil in der Elektrolyse bezeichnet, das in direktem Kontakt mit der Elektrolytflüssigkeit steht.

Darüber hinaus oder unabhängig davon kann es bevorzugt sein, wenn die Kathode aus einem Nickel haltigen Material besteht. Für die Kathode geeignete Nickel haltigen Materialien sind Ni-Co-Zn, Ni-Mo oder Ni/Al/Mo-Legierungen oder Raney-Nickel (Ni/Al). Darüber hinaus kann die Kathode auch aus Raney-Nickel hergestellt werden, bei dem ein Teil oder Großteil des Aluminiums extrahiert wurde, um so eine poröse Oberfläche zu generieren. Zudem kann eine Kathode verwendet werden, die im Wesentlichen aus Nickel (d.h. zu mindestens 80 Gew.-% bevorzugt mindestens 90 Gew.-%) besteht, und die eine Beschichtung aus Pt/C (Platin auf Kohle) aufweist.

Weiterhin kann es bevorzugt sein, wenn die Anode und/oder die Kathode als Drahtnetzelektrode bzw. in Form eines Streckmetalls oder gestanztes Blech vorliegt, wobei es bevorzugt ist, wenn mindestens die Anode in einer derartigen Form vorliegt. Die Anode kann in diesem Fall auch mit einer katalytischen Beschichtung versehen sein. Falls als Separator eine Kationen Austausch Membran verwendet wird, ist die Anode zweckmäßig in direktem Kontakt mit der Membran positioniert.

Die Anode kann auch über einen Stromabnehmer mit der Wand der Anodenhalbzelle in Kontakt stehen, wobei dieser Stromabnehmer aus einer porösen Metallstruktur, wie einem Nickel- oder Stahl-Schaum oder -Drahtgeflecht, bestehen kann. Ebenso kann die Kathode auch über einen Stromabnehmer mit der Wand der Kathodenhalbzelle in Kontakt stehen, der ebenfalls aus einer porösen Metallstruktur, wie einem Nickel- oder Stahl-Schaum oder -Drahtgeflecht, bestehen kann.

Ein besonders zweckmäßig in das erfindungsgemäße Verfahren oder die erfindungsgemäße Vorrichtung einzubeziehende Elektrolysezelle ist beispielsweise in de WO 2015/007716 A1 beschrieben.

Auch für die vorstehend geschilderte Vorrichtung ist es nicht zwangsläufig erforderlich, dass sie Flüssigkeitsreservoire aufweist, die der Anoden- und Kathodenhalbzelle in Fließrichtung vorgeschaltet sind. Diese Flüssigkeitsreservoire können entbehrlich sein, solange sichergestellt ist, das der aus dem kathodischen Gasabscheider ablaufende Elektrolyt ausschließlich der Anodenhalbzelle und der aus dem anodischen Gasabscheider ablaufende Elektrolyt ausschließlich der Kathodenhalbzelle zugeführt wird. In einer weiteren Ausführungsform betrifft die vorliegende Erfindung daher auch eine Vorrichtung zur elektrolytischen Spaltung von Wasser in Wasserstoff und Sauerstoff, die eine Anodenhalbzelle mit einer Anode, eine Kathodenhalbzelle mit einer Kathode sowie einen zwischen Anodenhalbzelle und Kathodenhalbzelle angeordneten Separator umfasst, wobei die Anodenhalbzelle und die Kathodenhalbzelle jeweils in Fließverbindung mit einem in Bezug auf die Anodenhalbzelle bzw. die Kathodenhalbzelle separaten, Gasabscheider stehen. In dieser Vorrichtung steht der Gasabscheider der Anodenhalbzelle in Fließverbindung mit der Kathodenhalbzelle und nicht in Fließverbindung mit der Anodenhalbzelle, während der Gasabscheider der Kathodenhalbzelle in Fließverbindung mit der Anodenhalbzelle und nicht in Fließverbindung mit der Kathodenhalbzelle steht.

Wie vorstehend erwähnt wird dem Elektrolyten durch den Elektrolyseprozess Wasser entzogen, was, um einen Anstieg der Konzentration des Elektrolyten zu vermeiden, im Laufe des Elektrolyseverfahrens zweckmäßig durch Zugabe von Wasser in den Elektrolyseprozess ausgeglichen werden sollte. Zu diesem Zweck weist die erfindungsgemäße Vorrichtung bevorzugt eine Zuleitung für Wasser in den Elektrolytkreislauf auf. Das Wasser kann prinzipiell an jeder Stelle des Elektrolytkreislaufs zugegeben werden, wie z.B. im Bereich der Flüssigkeitsreservoire der Kathoden- und/oder Anodenhalbzelle, der Gasabscheider der Kathoden- und/oder Anodenhalbzelle und/oder der Kathoden- und /oder Anodenhalbzelle, oder in Leitungen, die diese Bestandteile der erfindungsgemäßen Vorrichtung miteinander verbinden. Bevorzugt erfolgt die Wasserzugabe jedoch nicht in der Kathoden- und/oder Anodenhalbzelle, da die Gefahr besteht, dass sich dort eine inhomogene Elektrolytkonzentration ausbildet, die die Effizienz des Verfahrens beeinträchtigen kann.

### Kurze Beschreibung der Zeichnungen

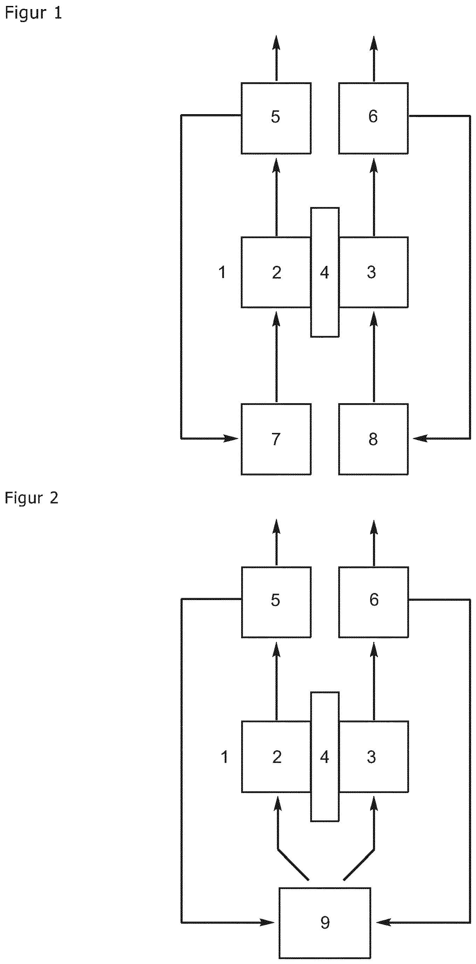

Figur 1 beschreibt ein Verfahren des Standes der Technik, in dem die Elektrolytströme für die Anoden- und Kathodenhalbzelle als getrennte Zyklen geführt werden. Die Elektrolysezelle 1 wird dabei durch eine Anodenhalbzelle 2 und eine Kathodenhalbzelle 3 gebildet, die durch einen Separator 4 voneinander getrennt sind. Sowohl Anodenhalbzelle als auch Kathodenhalbzelle weisen jeweils einen Gasabscheider 5 und 6 auf, der jeweils der Kathoden- und Anodenhalbzelle in Fließrichtung nachgeschaltet ist. Im Gasabscheider wird das in der Anoden- und Kathodenhalbzelle generierte Gas von der Flüssigkeit abgetrennt, die anschließend in ein jeweils separates Flüssigkeitsreservoir 7 und 8 fließt, von dem der Elektrolyt erneut in die Anodenhalbzelle 2 und die Kathodenhalbzelle 3 eingespeist wird.
Figur 2 beschreibt das im Stand der Technik als divided circle-Verfahren bekannte Verfahren. Dieses wird analog dem Verfahren mit getrennten Elektrolytzyklen durchgeführt wird, mit der Ausnahme, dass an Stelle von zwei separaten Flüssigkeitsreservoirs 7 und 8 ein gemeinsames Flüssigkeitsreservoir 9 vorliegt, in das die aus jeweiligen Gasabscheidern 5 und 6 abgeleiteten Elektrolytströme geführt werden und von dem sie jeweils getrennt in die Anoden- und Kathodenhalbzelle geleitet werden.

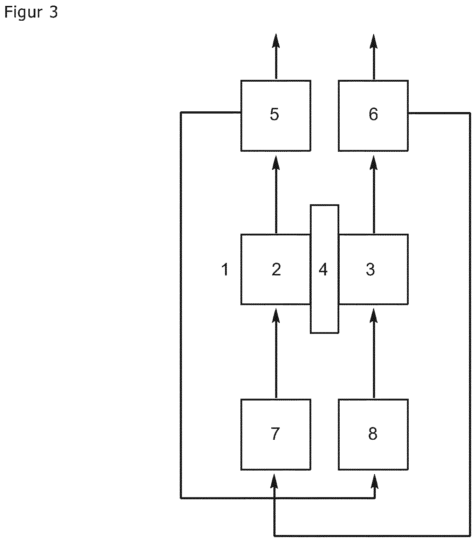

Figur 3 beschreibt ein Verfahren gemäß der vorliegenden Erfindung, das sich von dem Verfahren mit getrennten Elektrolytzyklen dadurch unterscheidet, dass der aus dem Gasabscheider der Anodenhalbzelle 5 erhaltene Elektrolytstrom ausschließlich in das Flüssigkeitsreservoir der Kathodenhalbzelle 8 eingeleitet wird, während der Elektrolytstrom aus dem Gasabscheider der Kathodenhalbzelle 6 ausschließlich in das Flüssigkeitsreservoir der Anodenhalbzelle 7 eingeleitet wird.

Dem Fachmann ist ersichtlich, dass eine Vielzahl von Zellen, wie sie vorstehend beschrieben wurden als modulare Elemente eines Elektrolyseurs verwendet werden können. Beispielsweise kann ein Elektrolyseur erhalten werden, in dem eine Anordnung von mehreren elektrisch in Reihe geschalteten Zellen vorliegen kann.

Nachfolgend wird die vorliegende Erfindung anhand einiger Beispiele näher illustriert, die jedoch nicht als beschränkend für den Schutzumfang der vorliegenden Anmeldung verstanden werden sollen.

### Beispiel 1

Eine Elektrolysevorrichtung gemäß dem Stand der Technik, bei dem der Elektrolyt in getrennten Zyklen durch die Kathoden- und Anodenhalbzellen der Elektrolysezelle geführt wird, wurde mit einer entsprechenden Verfahrensführung gemäß der vorliegenden Erfindung verglichen. Dazu wurden die jeweiligen Elektrolysevorrichtungen mit Elektrolyten verschiedener NaOH-Konzentrationen befüllt. Als Elektrolysenzelle wurde eine Zelle mit einer Oberfläche von 120 cm² verwendet. Die Elektrolyse wurde jeweils bei Temperaturen von 80°C durchgeführt.

Nachdem das Verfahren für einige Zeit (30 min) bei einer Stromdichte von 6 kA/m² gefahren wurde, wurde jeweils die Konzentration der Natronlauge in der Anoden- und Kathodenhalbzelle sowie die Spannung bestimmt. Die Ergebnisse sind in der folgenden Tabelle 1 wiedergegeben.

**Tabelle1**

| Verfahrensführung | NaOH-Konzentration Anode [%] | NaOH-Konzentration Kathode [%] | Spannung [V] |
|---|---|---|---|
| SC | 32,41 | 32,98 | 2,61 |
| SC | 26,18 | 28,39 | 2,34 |
| SC | 20,97 | 23,64 | 2,20 |
| SC | 16,01 | 20,75 | 2,17 |
| SC | 13,17 | 18,32 | 2,17 |
| CF | 15,0 | 15,0 | 2,12 |

| | | | |
|---|---|---|---|
| SC = seperated circles; CF = cross flow (erfindungsgemäß) | | | |

### Beispiel 2

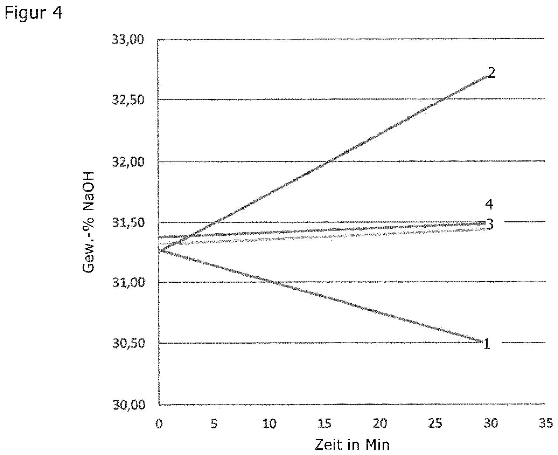

In einem weiteren Versuch wurde eine erfindungsgemäße Verfahrensführung mit einer Verfahrensführung verglichen, bei dem der aus dem Gasabscheider der Anoden- und Kathodenhalbzelle abgeleitete Elektrolyt in ein gemeinsames Flüssigkeitsreservoir geführt wurde (divided circles Verfahren). Auch diese Messungen wurden bei einer Temperatur von 80°C sowie einer Stromdichte von 6 kA/m² durchgeführt. In diesem Versuch wurde jeweils die Entwicklung der NaOH-Konzentration im Elektrolyten über die Zeit bestimmt. Die Ergebnisse dieser Untersuchungen sind in Figur 4 wiedergegeben.

In den Untersuchungen zeigte sich, dass bei einer Verfahrensführung gemäß dem divided circles Verfahren (Figur 2) bereits nach etwa 30 min ein signifikanter Unterschied der NaOH-Konzentration zwischen der Anoden- und Kathodenhalbzelle feststellbar war (die Konzentration betrug etwa 30,5 Gew.-% auf der Anodenseite (**1** in Figur 4) und etwa 32,7 Gew.-% auf der Kathodenseite (**2** in Figur 4) bei einer Anfangskonzentration von 31,3 Gew.-% NaOH auf beiden Seiten). Demgegenüber stieg die NaOH-Konzentration bei einer erfindungsgemäßen Verfahrensführung nur geringfügig von etwa 31,3 auf 31,4 Gew.-% auf der Anodenseite (**3** in Figur 4) und 31,4 auf etwa 31,5 Gew.-% auf der Kathodenseite (**4** in Figur 4) an.

Demzufolge zeigt sich, dass bei einer erfindungsgemäßen Verfahrensführung eine im Wesentlichen konstante Natriumhydroxidkonzentration im Elektrolyten über die Zeit eingestellt werden kann, was weder bei einer Verfahrensführung mit getrennten Zyklen noch bei einer Verfahrensführung, indem die Elektrolyten zwischenzeitlich in einem gemeinsamen Reservoir miteinander vermischt werden, möglich ist. Dies hat merklich geringere Spannungen zur Folge.

### Bezugszeichenliste

- 1: Elektrolyseur
- 2: Anodenhalbzelle
- 3: Kathodenhalbzelle
- 4: Separator
- 5: Gasabscheider der Anodenhalbzelle
- 6: Gasabscheider der Kathodenhalbzelle
- 7: Flüssigkeitsreservoir der Anodenhalbzelle
- 8: Flüssigkeitsreservoir der Kathodenhalbzelle
- 9: gemeinsames Flüssigkeitsreservoir für Anoden- und Kathodenhalbzelle

## Patentansprüche

1. Verfahren zur alkalischen Elektrolyse von Wasser mit einem Elektrolyten in einem Elektrolyseur (1) umfassend mindestens eine Elektrolysezelle, einen kathodischen Gasabscheider (6), einen anodischen Gasabscheider (5), ein erstes Flüssigkeitsreservoir (7) für den Elektrolyten und ein vom ersten Flüssigkeitsreservoir getrenntes zweites Flüssigkeitsreservoir (8) für den Elektrolyten,
wobei die Elektrolysezelle eine Anodenhalbzelle (2) mit einer Anode, eine Kathodenhalbzelle (3) mit einer Kathode, und einen zwischen Anodenhalbzelle (2) und Kathodenhalbzelle (3) angeordneten Separator (4) umfasst,
wobei ein Strom an den mit dem Elektrolyten gefüllten Elektrolyseur (1) angelegt wird, um die Elektrolyse durchzuführen,
wobei Elektrolyt aus dem ersten Flüssigkeitsreservoir (7) der Anodenhalbzelle (2) zugeführt wird und der aus der Anodenhalbzelle (2) ablaufende Anolyt dem anodischen Gasabscheider (5) zugeführt wird, in dem das Gas vom Anolyten abgeschieden wird, und
wobei Elektrolyt aus dem zweiten Flüssigkeitsreservoir (8) der Kathodenhalbzelle (3) zugeführt wird und der aus der Kathodenhalbzelle (3) ablaufende Katholyt dem kathodischen Gasabscheider (6) zugeführt wird, in dem das Gas vom Katholyten abgeschieden wird,
**dadurch gekennzeichnet, dass**
der vom Gas befreite Anolyt aus dem anodischen Gasabscheider (5) in das zweite Flüssigkeitsreservoir (8) zurückgeführt wird und der vom Gas befreite Katholyt aus dem kathodischen Gasabscheider (6) in das erste Flüssigkeitsreservoir (7) zurückgeführt wird.

2. Verfahren nach Anspruch 1, **dadurch gekennzeichnet, dass** der Elektrolyt wässrige Natron- oder Kalilauge umfasst.

3. Verfahren nach Anspruch 2, **dadurch gekennzeichnet, dass** die wässrige Natron- oder Kalilauge in einer Konzentration im Bereich von 8 bis 45 Gew.-%, bevorzugt 10 bis 40 Gew.-%, eingesetzt wird.

4. Verfahren nach einem der Ansprüche 1 bis 3, **dadurch gekennzeichnet, dass** im Elektrolyseur (1) eine Durchflussgeschwindigkeit des Elektrolyten in Relation zum Zellvolumen im Bereich von 1 bis 6 L_{Elektrolyt}/h·L_{Halbzellenvolumen}, bevorzugt 2 bis 4 L_{Elektrolyt}/h·L_{Halbzellenvolumen} eingestellt wird.

5. Verfahren nach einem der Ansprüche 1 bis 4, **dadurch gekennzeichnet, dass** die Elektrolyse bei einer Temperatur im Bereich von 50 bis 95 °C bevorzugt 65 bis 92 °C und besonders bevorzugt 70 bis 90 °C durchgeführt wird.

6. Verfahren nach einem der vorstehenden Ansprüche, **dadurch gekennzeichnet, dass** die Elektrolyse bei einem Druck im Bereich bis 30 bar durchgeführt wird, bevorzugt bis 5 bar.

7. Verfahren nach einem der vorstehenden Ansprüche, **dadurch gekennzeichnet, dass** die Elektrolyse bei einer Stromdichte im Bereich bis 25 kA/m², bevorzugt bis 15 kA/m², durchgeführt wird.

8. Vorrichtung zur elektrolytischen Spaltung von Wasser in Wasserstoff und Sauerstoff, umfassend eine Anodenhalbzelle (2) mit einer Anode, eine Kathodenhalbzelle (3) mit einer Kathode sowie einen zwischen Anodenhalbzelle (2) und Kathodenhalbzelle (3) angeordneten Separator (4),
wobei die Anodenhalbzelle (2) und die Kathodenhalbzelle (3) jeweils in Fließverbindung mit einem in Bezug auf die Anodenhalbzelle (2) bzw. die Kathodenhalbzelle (3) separaten Flüssigkeitsreservoir (7, 8) stehen, und wobei die Anodenhalbzelle (2) und die Kathodenhalbzelle (3) jeweils in Fließverbindung mit einem in Bezug auf die Anodenhalbzelle (2) bzw. die Kathodenhalbzelle (3) separaten Gasabscheider (5, 6) stehen,
**dadurch gekennzeichnet, dass** der Gasabscheider der Anodenhalbzelle (5) in Fließverbindung mit dem Flüssigkeitsreservoir der Kathodenhalbzelle (8) und nicht in Fließverbindung mit dem Flüssigkeitsreservoir der Anodenhalbzelle (7) steht und dass der Gasabscheider der Kathodenhalbzelle (6) in Fließverbindung mit dem ersten Flüssigkeitsreservoir der Anodenhalbzelle (7) und nicht in Fließverbindung mit dem ersten Flüssigkeitsreservoir der Kathodenhalbzelle (8) steht.

9. Vorrichtung nach Anspruch 8, **dadurch gekennzeichnet, dass** der Separator (4) ein semipermeables Diaphragma oder eine perfluorierte Sulfonmembran aufweist.

10. Vorrichtung nach Anspruch 8 oder 9, **dadurch gekennzeichnet, dass** die Anode aus einem Nickel-haltigen Material, bevorzugt aus Nickel, besteht.

11. Vorrichtung nach einem der Ansprüche 8 bis 10, **dadurch gekennzeichnet, dass** die Kathode aus einem Nickel-haltigen Material, bevorzugt aus Nickel, besteht.

12. Vorrichtung nach einem der Ansprüche 8 bis 11, **dadurch gekennzeichnet, dass** die Anode und/oder die Kathode als Drahtnetzelektrode oder in Form eines Streckmetalls oder gestanzten Blechs vorliegt.

## Claims

1. A process for the alkaline electrolysis of water with an electrolyte in an electrolyzer (1) comprising at least an electrolytic cell, a cathodic gas separator (6), an anodic gas separator (5), a first liquid reservoir (7) for the electrolyte and a second liquid reservoir (8) for the electrolyte that is separate from the first liquid reservoir,
wherein the electrolytic cell comprises an anode half-cell (2) having an anode, a cathode half-cell (3) having a cathode, and a separator (4) arranged between the anode half-cell (2) and cathode half-cell (3), wherein a current is applied to the electrolyzer (1) filled with the electrolyte so as to carry out the electrolysis,
wherein electrolyte is supplied from the first liquid reservoir (7) to the anode half-cell (2) and the anolyte flowing out of the anode half-cell (2) is supplied to the anodic gas separator (5), in which the gas is separated from the anolyte, and
wherein electrolyte is supplied from the second liquid reservoir (8) to the cathode half-cell (3) and the catholyte flowing out of the cathode half-cell (3) is supplied to the cathodic gas separator (6), in which the gas is separated from the catholyte,
**characterized in that**
the gas-stripped anolyte from the anodic gas separator (5) is returned to the second liquid reservoir (8) and the gas-stripped catholyte from the cathodic gas separator (6) is returned to the first liquid reservoir (7).

2. The process as claimed in claim 1, **characterized in that** the electrolyte comprises aqueous sodium hydroxide solution or potassium hydroxide solution.

3. The process as claimed in claim 2, **characterized in that** the aqueous sodium hydroxide solution or potassium hydroxide solution is used in a concentration within the range from 8% to 45% by weight, preferably from 10% to 40% by weight.

4. The process as claimed in any of claims 1 to 3, **characterized in that** an electrolyte flow rate in relation to cell volume within the range from 1 to 6 L_{electrolyte}/h·L_{half-cell volume}, preferably 2 to 4 L_{electrolyte}/h·L_{half-cell} volume, is established in the electrolyzer (1).

5. The process as claimed in any of claims 1 to 4, **characterized in that** the electrolysis is carried out at a temperature within the range from 50 to 95°C, preferably 65 to 92°C, and more preferably 70 to 90°C.

6. The process as claimed in any of the preceding claims, **characterized in that** the electrolysis is carried out at a pressure within the range of up to 30 bar, preferably up to 5 bar.

7. The process as claimed in any of the preceding claims, **characterized in that** the electrolysis is carried out at a current density within the range of up to 25 kA/m², preferably up to 15 kA/m².

8. A device for the electrolytic splitting of water into hydrogen and oxygen, comprising an anode half-cell (2) having an anode, a cathode half-cell (3) having a cathode, and a separator (4) arranged between the anode half-cell (2) and cathode half-cell (3),
wherein the anode half-cell (2) and the cathode half-cell (3) are each in fluid communication with a liquid reservoir (7, 8) that is separate from the anode half-cell (2) and from the cathode half-cell (3), and wherein the anode half-cell (2) and the cathode half-cell (3) are each in fluid communication with a gas separator (5, 6) that is separate from the anode half-cell (2) and from the cathode half-cell (3),
**characterized in that** the gas separator (5) of the anode half-cell (2) is in fluid communication with the liquid reservoir (8) of the cathode half-cell and not in fluid communication with the liquid reservoir (7) of the anode half-cell, and **in that** the gas separator (6) of the cathode half-cell is in fluid communication with the first liquid reservoir (7) of the anode half-cell and not in fluid communication with the first liquid reservoir (8) of the cathode half-cell.

9. The device as claimed in claim 8, **characterized in that** the separator has a semipermeable diaphragm or a perfluorinated sulfone membrane.

10. The device as claimed in claim 8 or 9, **characterized in that** the anode consists of a nickel-containing material, preferably of nickel.

11. The device as claimed in any of claims 8 to 10, **characterized in that** the cathode consists of a nickel-containing material, preferably of nickel.

12. The device as claimed in any of claims 8 to 11, **characterized in that** the anode and/or the cathode is present as gauze electrode or in the form of an expanded metal or stamped sheet metal.

## Revendications

1. Procédé d'électrolyse alcaline de l'eau avec un électrolyte dans un électrolyseur (1) comprenant au moins une cellule électrolytique, un séparateur de gaz cathodique (6), un séparateur de gaz anodique (5), un premier réservoir de liquide (7) destiné à l'électrolyte et un deuxième réservoir de liquide séparé du premier réservoir de liquide (8) et destiné à l'électrolyte,
la cellule électrolytique comprenant une demi-cellule anodique (2) pourvue d'une anode, une demi-cellule cathodique (3) pourvue d'une cathode, et un séparateur (4) disposé entre la demi-cellule anodique (2) et la demi-cellule cathodique (3),
un courant étant appliqué à l'électrolyseur (1), rempli de l'électrolyte, afin effectuer l'électrolyse, l'électrolyte étant amené du premier réservoir de liquide (7) à la demi-cellule anodique (2) et l'anolyte sortant de la demi-cellule anodique (2) étant amené au séparateur de gaz anodique (5) dans lequel le gaz est séparé de l'anolyte, et
l'électrolyte étant amené du deuxième réservoir de liquide (8) à la demi-cellule cathodique (3) et le catholyte sortant de la demi-cellule cathodique (3) étant amené au séparateur de gaz cathodique (6) dans lequel le gaz est séparé du catholyte,
**caractérisé en ce que**
l'anolyte libéré du gaz est ramené du séparateur de gaz anodique (5) au deuxième réservoir de liquide (8) et le catholyte libéré du gaz est ramené du séparateur de gaz cathodique (6) au premier réservoir de liquide (7).

2. Procédé selon la revendication 1, **caractérisé en ce que** l'électrolyte comprend de la solution aqueuse de soude ou de potasse.

3. Procédé selon la revendication 2, **caractérisé en ce que** la solution aqueuse de soude ou de potasse est utilisée à une concentration allant de 8 à 45 % en poids, de préférence de 10 à 40 % en poids.

4. Procédé selon l'une des revendications 1 à 3, **caractérisé en ce qu'**un deuxième débit de l'électrolyte rapporté au volume de la cellule dans la gamme allant de 1 à 6 L_{électrolyte}/h·L_{volume de demi-cellule}, de préférence de 2 à 4 L_{électrolyte}/h·L_{volume de demi-cellule} est utilisé dans l'électrolyseur (1).

5. Procédé selon l'une des revendications 1 à 4, **caractérisé en ce que** l'électrolyse est effectuée à une température dans la gamme allant de 50 à 95 °C, de préférence de 65 à 92 °C et de manière particulièrement préférée de 70 à 90 °C.

6. Procédé selon l'une des revendications précédentes, **caractérisé en ce que** l'électrolyse est effectuée à une pression pouvant atteindre 30 bars, de préférence 5 bars.

7. Procédé selon l'une des revendications précédentes, **caractérisé en ce que** l'électrolyse est effectuée à une densité de courant pouvant atteindre 25 kA/m², de préférence 15 kA/m².

8. Dispositif de séparation électrolytique de l'eau en hydrogène et oxygène, comprenant une demi-cellule anodique (2) pourvue d'une anode, une demi-cellule cathodique (3) pourvue d'une cathode et un séparateur (4) disposé entre la demi-cellule anodique (2) et la demi-cellule cathodique (3),
la demi-cellule anodique (2) et la demi-cellule cathodique (3) étant chacune reliées fluidiquement à un réservoir de liquide (7, 8) qui est séparé de la demi-cellule anodique (2) et de la demi-cellule cathodique (3), et la demi-cellule anodique (2) et la demi-cellule cathodique (3) étant chacune reliées fluidiquement à un séparateur de gaz (5, 6) qui est séparé de la demi-cellule anodique (2) ou de la demi-cellule cathodique (3),
**caractérisé en ce que** le séparateur de gaz de la demi-cellule anodique (5) est relié fluidiquement au réservoir de liquide de la demi-cellule cathodique (8), et n'est pas relié fluidiquement au réservoir de liquide de la demi-cellule anodique (7) et **en ce que** le séparateur de gaz de la demi-cellule cathodique (6) est relié fluidiquement au premier réservoir de liquide de la demi-cellule anodique (7) et n'est pas relié fluidiquement au premier réservoir de liquide de la demi-cellule cathodique (8).

9. Dispositif selon la revendication 8, **caractérisé en ce que** le séparateur (4) comporte une membrane semi-perméable ou une membrane en sulfone perfluorée.

10. Dispositif selon la revendication 8 ou 9, **caractérisé en ce que** l'anode est en un matériau contenant du nickel, de préférence en nickel.

11. Dispositif selon l'une des revendications 8 à 10, **caractérisé en ce que** la cathode est en un matériau contenant du nickel, de préférence en nickel.

12. Dispositif selon l'une des revendications 8 à 11, **caractérisé en ce que** l'anode et/ou la cathode se présente(nt) sous la forme d'une électrode en treillis métallique ou sous la forme de métal étiré ou de tôle emboutie.
